Europäisches Patentamt

European Patent Office

Office européen des brevets

(19)

(11) Veröffentlichungsnummer: **0 243 911**
**A2**

(12) **EUROPÄISCHE PATENTANMELDUNG**

(21) Anmeldenummer: **87106048.9**

(22) Anmeldetag: **25.04.87**

(51) Int. Cl.³: **C 08 L 27/06**
**C 08 L 55/02, C 08 L 25/12**
**C 08 L 9/00**

(30) Priorität: **02.05.86 DE 3615028**

(43) Veröffentlichungstag der Anmeldung:
**04.11.87 Patentblatt 87/45**

(84) Benannte Vertragsstaaten:
**BE DE ES FR GB IT SE**

(71) Anmelder: **J. H. Benecke AG**
**Beneckeallee 40**
**D-3000 Hannover 1(DE)**

(72) Erfinder: **Kock, Günther, Dr.**
**Grafenbergerstrasse 28**
**D-3012 Langenhagen 1(DE)**

(74) Vertreter: **UEXKÜLL & STOLBERG Patentanwälte**
**Beselerstrasse 4**
**D-2000 Hamburg 52(DE)**

(54) **Thermoformbare Folie.**

(57) Die Erfindung betrifft eine thermoformbare Folie ohne Monomerweichmacher auf Basis von Polyvinylchlorid und/oder Acrylnitril-Butadien-Styrol-Copolymeren und/oder Acrylnitril-Butadien-Kautschuken und/oder Styrol-Acrylnitril-Copolymeren, welche dadurch gekennzeichnet ist, daß sie thermoplastische Polyurethane enthält und im wesentlichen frei von Monomerweichmachern ist.

EP 0 243 911 A2

Die Erfindung betrifft thermoformbare Folien ohne Monomerweichmacher auf Basis von Polyvinylchlorid (PVC), Acrylnitril-Butadien-Styrol-Copolymeren (ABS), Acrylnitril-Butadien-Kautschuken (ABR) und/oder Styrol-Acrylnitril-Copolymeren (SAN).

Thermoformbare Folien auf Basis der vorstehend genannten Bestandteile werden insbesondere als Tiefziehfolien verwendet. Das Tiefziehen setzt gute Verformungseigenschaften der Folie voraus.

Tiefziehfolien werden unter anderem im Fahrzeugsektor zur Herstellung von hinterschäumten Polsterteilen, beispielsweise von Armaturenbrettverkleidungen eingesetzt. Diese Tiefziehfolien müssen gute Wärmestandfestigkeit aufweisen, d.h. sie müssen auch unter direkter Sonneneinstrahlung ihre Form und gegebenenfalls auch ihr Narbbild bewahren.

Die bislang im Automobilbereich eingesetzten Tiefziehfolien enthalten üblicherweise neben den eingangs genannten Bestandteilen monomere Weichmacher wie z.B. Phthalate und gegebenenfalls weichmachende Polymere wie z.B. Äthylenvinylacetat. Folien mit der für Polsterteile erforderlichen Weichheit, guten Verformungseigenschaften und guten Wärmestandfestigkeiten konnten bislang nur unter Verwendung von Monomerweichmachern hergestellt werden. Es ist bekannnt, daß Monomerweichermacher die Fähigkeit zur Wanderung oder (Migration) haben. Die Migration des Weichmachers wirkt sich häufig dann nachteilig aus, wenn verschiedene Kunststoffe miteinander in Kontakt stehen. So kann z.B. bei den bereits erwähnten hinterschäumten Polsterteilen der Weichmacher aus der Folie in den Polyurethanschaum wandern.

Diese Wanderung wird durch Einwirkung von Wärme beschleunigt. Durch die Wanderung tritt eine Störung des Foliengefüges ein. Die Folge ist, daß die Folie härter wird und mit der Zeit versprödet. Die Polsterteile verlieren dadurch ihre Funktion und werden unbrauchbar.

Um dem Problem der Migration monomerer Weichmacher zu begegnen, werden polymere Weichmacher wie z.B. Äthylenvinylacetat verwendet. Bei verschiedenen Anwendungen, insbesondere im Automobilbereich, war es bislang jedoch nicht möglich, auf die Verwendung monomerer Weichmacher zu verzichten. Die ohne monomere Weichmacher mit den bekannten polymeren Weichmachern hergestellten Folien wiesen unbefriedigende Verformungseigenschaften auf, waren relativ hart und auch nicht ausreichend wärmestandfest.

Aufgabe der Erfindung ist es, zur Überwindung der genannten Nachteile eine verbesserte thermoformbare Folie zu schaffen, deren Härte bzw. Weichheit in weiten Grenzen variiert werden kann und die insbesondere zur Herstellung von mit Polyurethanschaum hinterschäumten Polsterteilen, wie sie in Automobilen Verwendung finden, geeignet sind.

Die Aufgabe wird durch eine Folie der eingangs genannten Art gelöst, die dadurch gekennzeichnet ist, das sie thermoplastische Polyurethane enthält und im wesentlichen frei von Monomerweichmachern ist. Unter weichmacherfrei wird in diesem Zusammenhang verstanden, daß für die Pigmentaufbereitung noch bis zu etwa 3 Gew.% Monomerweichmacher vorhanden sein können.

Durch den Einsatz der thermoplastischen Polyurethane ist es möglich, bei den erfindungsgemäßen Folien auf die Verwendung von Monomerweichmachern völlig oder nahezu vollständig zu verzichten. Bei den erfindungsgemäßen Folien tritt daher

- 4 -

0243911

das Problem der Weichmachermigration nicht auf. Überraschenderweise wurde außerdem gefunden, daß die erfindungsgemäßen Folien eine höhere Reißdehnung als entsprechende weichmacherhaltige Folien aufweisen. Dadurch wird die Gebrauchstüchtigkeit der erfindungsgemäßen Folien zusätzlich verbessert.

Der Gehalt an thermoplastischen Polyurethanen in den erfindungsgemäßen Folien kann in weiten Grenzen variiert werden. Üblicherweise liegt dieser Gehalt im Bereich von 5 bis 40 Gew.-% und vorzugsweise im Bereich von 15 bis 25 Gew.-%. Es hat sich gezeigt, daß durch Erhöhung des Polyethylengehaltes auch die Reißdehnung der Folie erhöht wird. Für bestimmte Anwendungen, bei denen eine besonders hohe Reißdehnung erwünscht ist, können Folien hergestellt werden, die einen Polyurethangehalt von mehr als 40 Gew.-% aufweisen.

Die Erfindung ist nicht auf bestimmte Typen von Polyurethanen beschränkt. Es hat sich jedoch gezeigt, daß erfindungsgsgemäße Folien, die aliphatisch substituierte Polyurethane enthalten, ein besonders gutes Langzeitverhalten bei Belastung durch Wärme und Licht zeigen.

Die Weichheit der erfindungsgemäßen Folien kann durch Änderung der Zusammensetzung und insbesondere des Polyurethangehaltes eingestellt werden. Normalerweise werden Härtegrade im Bereich von 30 bis 50$^{\circ}$ Shore D angestrebt.

Die erfindungsgemäßen Folien können einschichtig oder mehrschichtig aufgebaut sein. Bei mehrschichtigem Aufbau kann eine der Schichten auch aus reinem Polyurethan bestehen. Beispielsweise kann bei einer mehrschichtigen Folie die mit einer Narbe oder Prägung versehene Außenschicht aus reinem Polyurethan bestehen. Durch diesen Aufbau erzielt man gegenüber einer Folie, deren Außenschicht butadienhaltig ist, eine Verbesserung der Licht- und Wärmebeständigkeit und damit eine Erhöhung der Lebensdauer.

Da die erfindungsgemäßen Folien keine monomeren Weichmacher enthalten, können die aus ihnen hergestellten Formteile problemlos mit anderen Kunststoffen kombiniert werden. Insbesondere sind die erfindungsgemäßen Folien zur Herstellung von mit Polyurethanschaum hinterschäumten Polsterteilen geeignet.

Die erfindungsgemäßen Folien können auf üblichen Kalanden hergestellt werden. Ihr Aufbau zu mehrschichtigen, lackierten und geprägten Folien ist nach bekannten Verfahren möglich.

Die erfindungsgemäßen Folien können übliche Zusätze wie Stabilisatoren, Gleitmittel und Pigmente enthalten.

Im folgenden wird die Erfindung beispielhaft im Vergleich mit typischen Zusammensetzungen gemäß Stand der Technik näher erläutert.

## Vergleichszusammensetzung

25 bis 50 Gew.-Teile PVC
50 bis 20 Gew.-Teile ABS
20 bis 10 Gew.-Teile ABR
 5 bis 20 Gew.-Teile Weichmacher

Aus den vier genannten Bestandteilen wurden Mischungen zu jeweils 100 Gew.-Teilen hergestellt. Die erhaltenen Folien wiesen eine Shore-Härte im Bereich von 30 bis 50$^{\circ}$ auf. Zur Herstellung von weichen Folien mußten relativ hohe Mengen Weichmacher verwendet werden.

### Erfindungsgemäße Zusammensetzung

25 bis 50 Gew.-Teile PVC
50 bis 20 Gew.-Teile ABS
20 bis  0 Gew.-Teile ABR
 5 bis 40 Gew.-Teile thermoplastisches Polyurethan

Wiederum wurden aus den genannten vier Bestandteilen Mischungen zu jeweil 100 Gew.-Teilen hergestellt. Die daraus erhaltenen Folien wiesen ebenfalls Shore Härten im Bereich von 30 bis 50° auf.

Aus der Gegenüberstellung mit der Vergleichszusammensetzung wird deutlich, daß bei den erfindungsgemäßen Folien nicht nur die Weichmacher, sondern zum Teil oder auch ganz die sonst zur Erzielung der Weichheit oft verwendeten Acrylnitril-Butadien-Kautschuke durch thermoplastische Polyurethane ersetzt werden können.

### Beispiel:

Es wurde eine Folie aus den folgenden Bestandteilen hergestellt:

30 Gew. % S-PVC K-Wert 70
25 Gew. % ABS
15 Gew. % Nitrilkautschuk und
25 Gew. % thermoplastisches Polyurethan.

Die Reißdehnung dieser Folie lag bei 300 bis 320%.

0243911

Eine Folie aus reinem thermoplastischen Polyurethan erreicht zum Vergleich leicht eine Reißdehnung von 500 bis 550%.

Kombinationen von derartigen Folie können Reißdehnungen von 350% und mehr erreichen.

Die Folien haben im allgemeinen eine Dicke von 0,60 bis 1,50 und vorzugsweise von 0,80 bis 1,0 mm. Kombinationsfolien aus der erfindungsgemäßen Abmischung mit einer reinen Polyurethanfolie als Oberschicht sehen letztere in einer Dicke von 0,20 bis 0,25 mm vor.

## Patentansprüche

1.  Thermoformbare Folie ohne Monomerweichmacher auf Basis von Polyvinylchlorid und/oder Acrylnitril-Butadien-Styrol-Copolymeren und/oder Acrylnitril-Butadien-Kautschuken und/oder Styrol-Acrylnitril-Copolymeren, dadurch gekennzeichnet, daß sie thermoplastische Polyurethane enthält und im wesentlichen frei von Monomerweichmachern ist.

2.  Folie nach Anspruch, dadurch gekennzeichnet, daß sie 5 bis 40 Gew.-% Polyurethan enthält.

3.  Folie nach Anspruch 1 oder 2, dadurch gekennzeichnet, daß sie 15 bis 25 Gew.-% Polyurethan enthält.

4.  Folie nach einem der Ansprüche 1 bis 3, dadurch gekennzeichnet, daß sie aliphatische Polyurethane enthält.

5. Folie nach einem der Ansprüche 1 bis 4, dadurch gekennzeichnet, daß sie eine Härte im Bereich von 30 bis 50° Shore D aufweist.

6. Folie nach einem der Ansprüche 1 bis 5, dadurch gekennzeichnet, daß sie mehrschichtig aufgebaut ist und eine der Schichten aus reinem Polyurethan besteht.

7. Verwendung der Folie nach einem der Ansprüche 1 bis 6 zur Herstellung von mit Polyurethanschaum hinterschäumten Polsterteilen.